# EUROPÄISCHE PATENTSCHRIFT

(11) **EP 1 172 427 B1**
(45) Veröffentlichungstag und Bekanntmachung des Hinweises auf die Patenterteilung: **07.04.2004**
(21) Anmeldenummer: 01113702.3
(22) Anmeldetag: 02.06.2001
(51) Int. Cl.: C09J 7/02, C09J 7/04, C09J 113/00, C09J 113/02

(54) **Verpackungsklebebänder**
Rubans adhésifs pour emballage
Packaging adhesive tapes

(30) Priorität: 12.07.2000 DE 10033716
(43) Veröffentlichungstag der Anmeldung: 16.01.2002
(73) Patentinhaber: Tesa AG, 20253 Hamburg (DE)
(72) Erfinder: Spies, Manfred Dr., 24576 Bad Bramstedt (DE)

(56) Entgegenhaltungen:
- EP-A- 1 078 967
- EP-A- 1 103 587

## Beschreibung

Die Erfindung betrifft die Entwicklung von Haftklebebändern auf Basis von Butadien/Acrylat Latices mit einem hohen Butadiengehalt und Harzdispersionen.

In der Patentliteratur existiert eine Vielzahl von Anmeldungen zur Herstellung von Verpackungsklebebändern.

Die seit langem bekannten klassischen Klebemassesyteme für Verpackungsklebebänder basieren im wesentlichen auf Naturkautschuk, Styrol-Blockcopolymeren und Polyacrylaten.

Die Naturkautschuksysteme werden üblicherweise als Lösung in einem aliphatischen Lösungsmittelgemisch eingesetzt. Wasserbasierte Naturkautschukmassen auf Basis Zentrifugenlatex sind ebenfalls bekannt. Für die Einstellung der geforderten klebtechnischen Eigenschaften ist der Zusatz von Harzen, Füllstoffen, Alterungsschutzmitteln unumgänglich. Eine Vemetzung erfolgt entweder chemisch über zugesetzte Vemetzungsagenzien, oder physikalisch über z.B. Elektronenstrahlhärtung. Synthetische Kautschuke auf Basis von Styrol-Blockcopolymeren wurden in der Vergangenheit ebenfalls als Klebemassen für Verpackungsklebebänder beschrieben. Hierbei handelt es sich um 100% Systeme, die nach Abmischung mit Harzen und weiteren Coagenzien im geschmolzenen Zustand ohne Anwesenheit von Lösungsmitteln oder Wasser aufgetragen werden können.

Die Verwendung von Polyacrylaten als Klebemassen für Verpackungsklebebänder ist ebenfalls bekannt. Neben Lösungen aus Polyacrylaten sind in der Vergangenheit auch Polyacrylatdispersionen beschrieben worden, die nach Compoundierung mit Harzdispersionen und weiteren Coagenzien die Anforderungen einer Verpackungsklebebandmasse erfüllen. Acrylatdispersionen zeigen ein relativ schlechtes Anfaßverhalten auf Kartons, insbesondere dann, wenn das Substrat aus mehrfach recyclierten Papieren stammt, was bei Verpackungskartons zunehmend der Fall ist. Durch Zusatz von Harzdispersionen kann dieser Mangel beseitigt werden. Da Naturharzdispersionen auf Basis von Kolophoniumderivaten die Kohäsion von Acrylatmassen häufig in unerwünschter Weise beeinflussen, bedient man sich eher der kohäsiveren Kohlenwasserstoffharzdispersionen, die von verschiedenen Harzherstellern angeboten werden.

Als Trägermaterialien für Verpackungsklebebänder werden üblicherweise monooder biaxial gereckte Polyolefine, PVC-Typen oder Papiere eingesetzt.

Butadien/Styrol Latices werden im Bereich der "Pressure Sensitive Adhesives" seit vielen Jahren zur Imprägnierung und Stabilisierung von Trägermaterialien eingesetzt. Hierbei stehen Papiere Gewebe und Vliese im Vordergrund. Die Imprägnierung oder Beschichtung darf aufgrund der Anwendung keinesfalls klebrig sein. Die für diese Anwendung eingesetzten Butadien/Styrol Copolymeren müssen daher einen relativ hohen Anteil an hartmachenden Monomeren enthalten, aber andererseits genügend weichmachendes Monomer, so daß das Copolymer insgesamt noch elastisch ist. Butadien/Styrol Latices mit einem Butadiengehalt von etwa 25-50% erfüllen diese Anforderung sehr gut. Filme dieser Copolymeren sind in Abhängigkeit des Butadiengehaltes mäßig elastisch bis elastisch, und nicht klebend. Derartige Copolymere sind schon seit vielen Jahren auf dem Rohstoffmarkt verfügbar (Butofan®-Typen der BASF, diverse Typen von Dow und Synthomer). Bedingt durch ihre Herstellung enthalten derartige Latices bzw. Dispersionen Emulgator-Systeme, um eine Kompatibilität zwischen der organischen und der wässrigen Phase herzustellen.

Butadien/Styrol Copolymere wurden in der Vergangenheit auch als Basispolymere für Etikettenmassen eingesetzt. Im Bereich der Etiketten kommt der Kohäsion häufig sekundäre Bedeutung zu, so daß schwach klebende Systeme nach Compoundierung mit üblichen Tackyfiern in vielen Fällen ausreichende Eigenschaften zeigen.

Als Gerüstpolymer für Verpackungsklebebandmassen sind nicht oder schwach klebende Copolymere auf Basis von Butadien/Styrol Copolymeren nur mangelhaft geeignet, da sie nur mit erheblichen Mengen an Tackyfierharzen klebrig gemacht werden können, was wiederum mit einem weitreichenden Kohäsionsverlust verbunden ist. Dieses schließt eine Anwendung als Klebemasse für Verpackungsklebebänder aus.

Butadien/Styrol Copolymere oder Butadien/Methylmethacrylat Copolymere mit einem hohen Butadiengehalt sind dagegen als Gerüstpolymere für Verpackungsklebebänder von hohem Interesse.

Butadien Copolymere mit einem hohen Butadiengehalt, die als Copolymerisationspartner ein hartes und damit kohäsives Segment enthalten, sind als Gerüstpolymere für anspruchsvolle Haftklebemassen geeignet, zeigen jedoch nur ein mäßiges Anfaßverhalten auf kritischen Untergründen. Aufgabe der Erfindung war es, Klebemassen auf Basis. von Butadiencopolymeren bereit zu stellen, die die genannten Mängel nicht aufweisen, und mit denen ein Haftklebeband gemacht werden kann, das den Anforderungen eines Verpackungsklebebandes gerecht wird.

Gelöst wurde die Aufgabe durch Verwendung von Butadien/Acrylat Dispersionen mit einem hohen Butadiengehalt, die mit geeigneten Harzdispersionen abgemischt wurden, wie festgelegt im Anspruch 1.

Bei der Gruppe der Butadien/Acrylat Copolymeren handelt es sich um Gerüstpolymere aus Butadien und einem mäßig harten Comonomer wie z.B. Butylacrylat. Butadien/Acrylat Copolymere weisen deutlich niedrigere Glasübergangspunkte auf als Butadien/Styrol- oder Butadien/Methylmethacrylat Copolymere. Bei einem Butadiengehalt von etwa 75% kann der Glasübergangspunkt um etwa 15°C auf -70°C abgesenkt werden, wenn man von dem Comonomeren Styrol auf z.B. Butylacrylat übergeht.

Zu den Compounds aus Gerüstpolymer und Harzdispersion können ggf. weitere Coagenzien wie z. B. Alterungsschutzmittel oder weitere Emulgatoren zugemischt werden, um den Alterungsschutz zu verbessern, oder die Abrolleigenschaften weiter an die Anwendung anzupassen. Nach Beschichtung der Klebemasse auf einem Polymer- oder Papierträger ist ein Haftklebeband erhältlich, das die Anforderungen eines Verpackungsklebebandes im Hinblick auf Tack, Klebkraft, Kohäsion und Abrolleigenschaften voll erfüllt.

### Klebemassen:

Die Copolymerisation von Butadien mit Acrylaten wie z. B. Butylacrylat in wässrigem Medium liefert Copolymere, die filmbildend sind, und die einen für druckempfindliches Kleben geeigneten Glasübergangspunkt aufweisen. Butadien/Acrylat Dispersionen werden allgemein durch den Einbau geringer Mengen carboxylhaltiger Gruppen stabilisiert, was gleichzeitig die Haftung auf vielen Untergründen verbessert.

Als Klebemassen für die Erfindung können insbesondere carboxylierte Butadien/Acrylat Copolymer-Dispersionen eingesetzt werden, mit einem Butadienanteil von 50-95%, vorzugsweise 60-85%, bezogen auf den Gesamtfeststoffanteil an Butadien und Acrylat, die im Gemisch mit Harzdispersionen eine hevorragende Eignung als Klebemassen für Verpackungsklebebänder zeigen. Carboxylierte derartige Copolymere enthalten insbesondere unter 10%, bevorzugt unter 5% bezogen auf den Monomergehalt an carboxylhaltigen Comonomer, insbesondere Acrylsäure, im Copolymer.

Erfindungsgemäße Butadien/Acrylat-Dispersionstypen mit einem Butadiengehalt >60% sind z.B. von Dow erhältlich.

Als Harzkomponente können sowohl Dispersionen synthetischer Harze (z.B. Kohlenwasserstoffharz, Terpenphenolharze etc.), als auch Naturharzdispersionen (z.B. Kolophoniumderivate, Polyterpene etc.) verwendet werden.

Kohlenwasserstoffharzdispersionen sind aufgrund der hohen Kohäsion deutlich zu bevorzugen. Der Schmelzpunkt der Basisharze sollte im Bereich 50-120°C liegen, vorzugsweise 60-100°C. Bezogen auf den Gesamtfeststoffgehalt an Butadien/Acrylat Copolymer und Harz sollte der Harzanteil im Bereich 5-60%, vorzugsweise 10-40% liegen. Zur gezielten Einstellung der klebtechnischen Eigenschaften können auch Mischungen aus unterschiedlichen Harzen eingesetzt werden. Zur Verbesserung des Alterungsverhaltens können Dispersionen üblicher Alterungsschutzmittel zugesetzt werden, die aus dem Bereich der Elastomeren hinreichend bekannt sind.

Weiterhin können bei Bedarf weiterer Additive zur Anpassung der Produkteigenschaften zugesetzt werden, wie z.B. Füllstoffe, Weichharze, Öle oder Emulgatoren z.B. vom Typ alkoxylierter Alkylphenole. Mit diesen Additiven gelingt es, die Abrolleigenschaften in gewünschter Weise zu beeinflussen.

Die Einstellung der Adhäsion/Kohäsion Balance kann durch chemische Vemetzung über die vorhandenen Carboxylgruppen durch zugesetzte Vemetzungsagenzien wie z.B. Aluminium- oder Titanchelat erfolgen. Eine strahlenchemische Vemetzung ist im Gegensatz zu vielen Styrol-Blockcopolymeren aufgrund des ausreichend hohen Molekulargewichtes ebenfalls möglich.

Eine Übersicht über mögliche Harzdispersionen findet sich in: Donatas Satas, *Handbook of Pressure Sensitive Adhesive Technology* , 2. Edition Resin Dispersion by Anne Z. Casey S. 545-566
Erfindungsgemäße Harzdispersionen sind z.B. über Hercules (NL) erhältlich.

Der Klebemasseauftrag beträgt 10-120g/m², bevorzugt 15-40g/m².

### Trägermaterialien:

Als Trägermaterialien für die Erfindung kommen die für Verpackungsanwendungen üblichen Trägermaterialien in Betracht. Hierbei handelt es sich im wesentlichen um Folien und Papiere, die aufgrund ihrer Eigenschaften und des Herstellungs- bzw. Nachbehandlungsprozeßes die geforderten mechanischen Eigenschaften aufweisen.

Im Falle der Folien handelt es sich im wesentlichen um Polyethylen, Polypropylen, Polyvinylchlorid und andere für die Anwendung üblichen Polymere und Copolymere, die sowohl einschichtig als auch mehrschichtig eingesetzt werden können. Bei mehrschichtigen Systemen kann auch die Zusammensetzung und die Dicke der einzelnen Schichten variieren.

Monoaxial und biaxial gereckte Polypropylene werden häufig für Verpackungsklebebänder, Strapping Tapes und andere Klebebänder eingesetzt, bei denen eine definierte Reißfestigkeit von nicht unerheblicher Bedeutung ist.

Monoaxial gereckte Polypropylene zeigen eine besonders gute Reißfestigkeit und geringe Dehnung in Längsrichtung. Derartige Trägermaterialien werden häufig für Strapping Anwendungen eingesetzt.

Zur Erzielung gleichmäßiger Festigkeitswerte in Längs- und Querrichtung müssen Folien biaxial gereckt werden.
Sowohl mono- als auch biaxial gereckte Polypropylene und Polyethylene sind als Trägermaterial für die Erfindung besonders geeignet. Die Reckverhältnisse orientieren sich dabei an den entsprechenden Anforderungen.

Es können sowohl Blas-, als auch Flachfolie eingesetzt werden.

Die Dicken der Folien liegen zwischen 10 und 250 µm, bevorzugt zwischen 20 und 120 µm.

Um eine ausreichende Haftung der Klebemasse auf dem Trägermaterial sicherzustellen muß die Oberflächenenergie der zu beschichtenden Seite innerhalb eines definierten Bereiches liegen. Dieses kann entweder über eine zusätzliche Beschichtung mit einem Primer gewährleistet werden, oder über eine Oberflächenbehandlung. Bevorzugt wird eine Corona- oder Flammenvorbehandlung, mit der die gewünschten Oberflächenenergien erreicht werden können. Die Oberflächenenergien sollten in einem Bereich von 25-50mN/m, bevorzugt 30-45 mN/m liegen.
Als Trägermaterialien kommen desweiteren imprägnierte und hochgeleimte definiert gekreppte Papiere mit Reißfestigkeiten in Betracht, die den gewünschten Anforderungen genügen. In Abhängigkeit der gewünschten Anwendung können sowohl Papiere mit höherer Längs-Dehnbarkeit als Quer-Dehnbarkeit eingesetzt werden, als auch Papiere mit höherer Quer-Dehnbarkeit als Längs-Dehnbarkeit, sowohl in gebleichter, als auch in der umweltfreundlichen ungebleichten Version.

Alle Prozentangaben beziehen sich auf Gewichts-%.

### Beispiele:

### Beispiel 1:

Eine Dispersionsklebemasse bestehend aus 65% einer carboxylierten Butadien/Acrylat Dispersion mit einem Butadiengehalt >50% (XZ 91861.00, Butadien/Acrylat Dispersion der Firma Dow) und 35% Tacolyn 1070 (KW-Harzdispersion der Firma Hercules) wird mit einem Drahtrakel kontinuierlich mit einer Schichtdicke von 25 g/m² auf einer mit 35 mN/m coronavorbehandelten 30µm dicken BOPP Folie beschichtet. Die Prozentangaben sind auf den Feststoff-Gehalt bezogen.

| Technische Bedingungen: | |
|---|---|
| Maschine | Technikumsbeschichtungsanlage |
| | |
| Auftragswerk | Drahtrakel |
| | |
| Trägerbahngeschwindigkeit | 3,5 m/min |

Das beschichtete Material wird anschließend thermisch getrocknet:

| | |
|---|---|
| Trocknung (Schwebedüsentrockner) | Zone 1: 80 °C |
| | Zone 2: 85 °C |

Das Ballenmaterial wird anschließend zu Rollen geschnitten.

### Klebtechnische Daten (Frischzustand):

Klebkraft/Stahl: 1,60N/cm
*Microscherweg (40°C, 3N: 45 µm*
*Thermoscherweg (5°C*/*min, 3N): 78°C*

### Beispiel 2:

Eine Dispersionsklebemasse bestehend aus 75% einer carboxylierten Butadien/Acrylat Dispersion mit einem Butadiengehalt >50% (XZ 91861.00, Butadien/Acrylat Dispersion der Firma Dow) und 25% Tacolyn 1070 (KW-Harzdispersion der Firma Hercules) wird mit einem Drahtrakel kontinuierlich mit einer Schichtdicke von 25 g/m² auf einer mit 35 mN/m coronavorbehandelten 30µm dicken BOPP Folie beschichtet. Die Prozentangaben sind auf den Feststoffgehalt bezogen.

| Technische Bedingungen: | |
|---|---|
| Maschine | Technikumsbeschichtungsanlage |
| | |
| Auftragswerk | Drahtrakel |
| | |
| Trägerbahngeschwindigkeit | 3,5 m/min |

Das beschichtete Material wird anschließend thermisch getrocknet:

| | |
|---|---|
| Trocknung (Schwebedüsentrockner) | Zone 1: 80 °C |
| | Zone 2: 85 °C |

Das Ballenmaterial wird anschließend zu Rollen geschnitten.

### Klebtechnische Daten (Frischzustand):

Klebkraft/Stahl: 1,2N/cm
Microscherweg (40°C, 3N: 35µm
Thermoscherweg (5°C/min, 3N): 80°C

## Patentansprüche

1. Verpackungsklebeband mit einem Träger und einer Klebemasse, **dadurch gekennzeichnet, dass** die Klebemasse als Butadien/Acrylat-Dispersion mit einem Butadiengehalt größer 50%, bezogen auf den Gesamtfeststoffanteil an Butadien und Acrylat, in Abmischung mit Harzdispersion auf dem Träger beschichtet und anschließend getrocknet ist.

2. Verpackungsklebeband nach Anspruch 1 **dadurch gekennzeichnet, daß** die Harzdispersion vom Typ einer Kohlenwasserstoffharzdispersion ist mit einem Erweichungspunkt des Basisharzes zwischen 50 und 120°C.

3. Verpackungsklebeband nach Anspruch 1 **dadurch gekennzeichnet, daß** die Harzdispersion ein Gemisch aus mehreren Kohlenwasserstoffharzdispersionen oder ein Gemisch aus Kohlenwasserstoffharzdispersionen mit Naturharzdispersionen ist.

4. Verpackungsklebeband nach Anspruch 1 **dadurch gekennzeichnet, daß** die Klebemasse durch zugesetzte übliche Vernetzer chemisch vernetzt ist.

5. Verpackungsklebeband nach Anspruch 1 **dadurch gekennzeichnet, daß** die Klebemasse physikalisch vernetzt ist, insbesondere durch z.B. ESH.

6. Verpackungsklebeband nach Anspruch 1 **dadurch gekennzeichnet, daß** der Träger ein gerecktes oder ungerecktes Polyolefin mit einer Foliendicke zwischen 20 und 120 µm, ein PVC oder ein Papier ist.

7. Verpackungsklebeband nach Anspruch 1 **dadurch gekennzeichnet, daß** der Masseauftrag der Klebemasse 10-120 g/m² beträgt.

8. Verpackungsklebeband nach Anspruch 1 **dadurch gekennzeichnet, daß** zur Verbesserung der Masseverankerung eine physikalische Oberflächenbehandlung des Trägers erfolgt ist oder der Träger mit einem Primer vorbehandelt ist.

9. Verpackungsklebeband nach Anspruch 1, **dadurch gekennzeichnet, daß** die Butadien/Acrylat-Dispersion vom Typ einer carboxylierten Butadien/Acrylat-Dispersion ist.

10. Verpackungsklebeband nach Anspruch 1, **dadurch gekennzeichnet, daß** der Harzanteil im Bereich 5 - 60%, insbesondere 10 - 40% bezogen auf den Gesamtfeststoffgehalt liegt.

11. Verwendung eines Verpackungsklebebandes nach einem der Ansprüche Anspruch 1 - 10 zum Verkleben mit hoher Anfassklebkraft und hohen Kohäsionswerten insbesondere auf recyclierten Papieren oder Pappen.

## Claims

1. An adhesive packaging tape comprising a backing and an adhesive composition, wherein the adhesive composition is coated onto the backing as a butadiene/acrylate dispersion having a butadiene content of more than 50%, based on the overall butadiene and acrylate solids fraction, in a blend with resin dispersion and is then dried.

2. The adhesive packaging tape as claimed in claim 1, wherein the resin dispersion is of the hydrocarbon resin dispersion type with a softening point of the base resin of between 50 and 120°C.

3. The adhesive packaging tape as claimed in claim 1, wherein the resin dispersion is a mixture of two or more hydrocarbon resin dispersions or a mixture of hydrocarbon resin dispersions with natural resin dispersions.

4. The adhesive packaging tape as claimed in claim 1, wherein the adhesive composition is chemically crosslinked by means of added customary crosslinkers.

5. The adhesive packaging tape as claimed in claim 1, wherein the adhesive composition is physically crosslinked, in particular by means of EBC, for example.

6. The adhesive packaging tape as claimed in claim 1, wherein the backing is an oriented or unoriented polyolefin having a film thickness of between 20 and 120 µm, a PVC or a paper.

7. The adhesive packaging tape as claimed in claim 1, wherein the application rate of the adhesive composition is 10-120 g/m².

8. The adhesive packaging tape as claimed in claim 1, wherein, to improve the anchoring of the composition, the backing has been physically surface treated or pretreated with a primer.

9. The adhesive packaging tape as claimed in claim 1, wherein the butadiene/acrylate dispersion is of the carboxylated butadiene/acrylate dispersion type.

10. The adhesive packaging tape as claimed in claim 1, wherein the resin fraction is situated in the range 5 - 60%, especially 10 - 40%, based on the overall solids content.

11. The use of an adhesive packaging tape as claimed in any of claims 1 - 10 for bonding with high initial bond strength and high cohesion values in particular on recycled papers or cardboards.

## Revendications

1. Ruban adhésif d'emballage avec un support et une pâte adhésive, **caractérisé en ce que** la pâte adhésive constituée d'une dispersion de butadiène/acrylate avec une teneur en butadiène supérieure à 50% par rapport à la teneur totale en solide de butadiène et d'acrylate et mélangée à une dispersion de résine est appliquée sur le support et est ensuite séchée.

2. Ruban adhésif d'emballage selon la revendication 1, **caractérisé en ce que** la dispersion de résine est du type dispersion de résine d'hydrocarbure avec un point de ramollissement de la résine de base compris entre 50 et 120°C.

3. Ruban adhésif d'emballage selon la revendication 1, **caractérisé en ce que** la dispersion de résine est un mélange de plusieurs dispersions de résine d'hydrocarbure ou un mélange de dispersions de résine d'hydrocarbure avec des dispersions de résine naturelle.

4. Ruban adhésif d'emballage selon la revendication 1, **caractérisé en ce que** la pâte adhésive est réticulée chimiquement par l'addition d'agents de réticulation habituels.

5. Ruban adhésif d'emballage selon la revendication 1, **caractérisé en ce que** la pâte adhésive est réticulée physiquement, en particulier par exemple par ESH.

6. Ruban adhésif d'emballage selon la revendication 1, **caractérisé en ce que** le support est une polyoléfine étirée ou non étirée dont l'épaisseur de film est comprise entre 20 et 120 µm, un PVC ou un papier.

7. Ruban adhésif d'emballage selon la revendication 1, **caractérisé en ce que** la pâte adhésive est appliquée à un taux de 10 à 120 g/m².

8. Ruban adhésif d'emballage selon la revendication 1, **caractérisé en ce que** pour améliorer l'ancrage de la pâte, on effectue un traitement physique de la surface du support ou l'on prétraite le support à l'aide d'une couche de fond.

9. Ruban adhésif d'emballage selon la revendication 1, **caractérisé en ce que** la dispersion de butadiène/acrylate est une dispersion du type butadiène/acrylate carboxylé.

10. Ruban adhésif d'emballage selon la revendication 1, **caractérisé en ce que** la teneur en résine est comprise dans la plage de 5 à 60% et en particulier de 10 à 40% par rapport à la teneur totale en solides.

11. Utilisation d'un ruban adhésif d'emballage selon l'une quelconque des revendications 1 à 10 pour collage à haute force d'accrochage et hautes valeurs de cohésion, en particulier sur des papiers ou des cartons recyclés.
